(19) Europäisches Patentamt
European Patent Office
Office européen des brevets

(11) **EP 2 351 485 A1**

(12) **EUROPEAN PATENT APPLICATION**
published in accordance with Art. 153(4) EPC

(43) Date of publication:
**03.08.2011 Bulletin 2011/31**

(21) Application number: **09819300.6**

(22) Date of filing: **09.10.2009**

(51) Int Cl.:
***A01N 43/54*** *(2006.01)* ***A01N 43/56*** *(2006.01)*
***A01P 7/04*** *(2006.01)*

(86) International application number:
**PCT/JP2009/067959**

(87) International publication number:
**WO 2010/041772 (15.04.2010 Gazette 2010/15)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.10.2008 JP 2008264489**

(71) Applicant: **Sumitomo Chemical Company, Limited**
**Tokyo 104-8260 (JP)**

(72) Inventor: **NATSUHARA, Katsuya**
**Toyonaka-shi**
**Osaka 561-0802 (JP)**

(74) Representative: **Vossius & Partner**
**Siebertstrasse 4**
**81675 München (DE)**

(54) **PEST CONTROL COMPOSITION AND PEST CONTROL METHOD**

(57) A pest controlling composition comprising, as active ingredients, a pyrimidine compound represented by Formula (1):

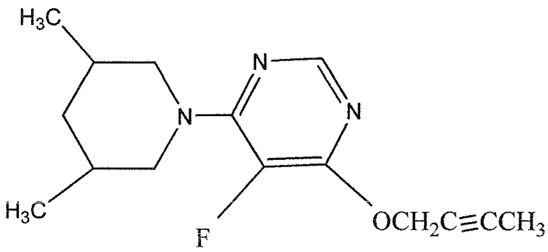

(1)

and an anthranilamide compound represented by Formula (2).

EP 2 351 485 A1

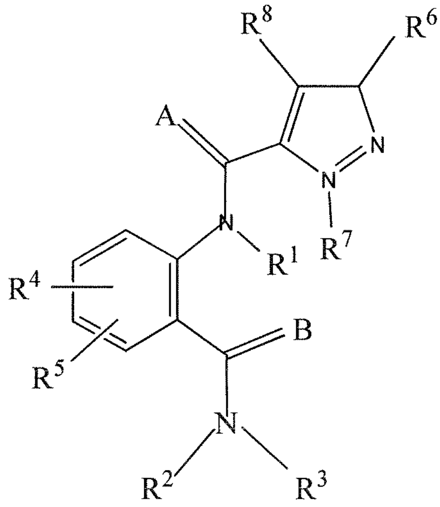

(2)

**Description**

TECHNICAL FIELD

The present invention relates to a pest controlling composition and a method for controlling pests.

BACKGROUND ART

Pyrimidine compounds (for example, refer to JP-A-2005-350353) have hitherto been known as an active ingredient of insecticides.

DISCLOSURE OF THE INVENTION

An object of the present invention is to provide a pest controlling composition having an excellent control effect against pests, and a method for controlling pests.

The present inventor has intensively studied and found that a control effect against pests is improved by using a pyrimidine compound represented by Formula (1) shown below together with an anthranilamide compound represented by Formula (2) shown below, thus leading to the present invention.

That is, the present invention includes the following constitutions:

[1] A pest controlling composition comprising, as active ingredients, a pyrimidine compound represented by Formula (1) :

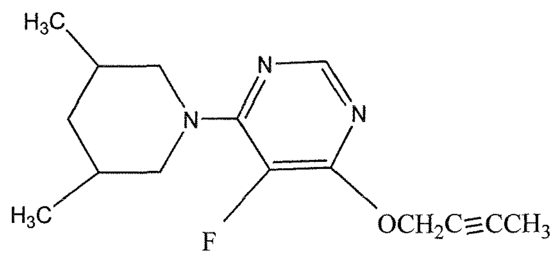

(1)

and an anthranilamide compound represented by Formula (2):

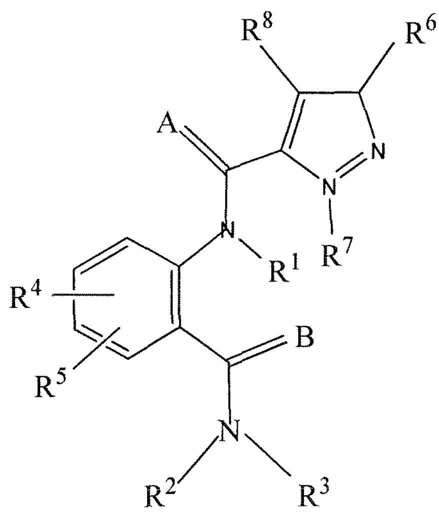

(2)

wherein A and B independently represent an oxygen atom or a sulfur atom;
$R^1$ represents a hydrogen atom, a $C_1$-$C_6$ alkyl group, a $C_2$-$C_6$ alkoxycarbonyl group, or a $C_2$-$C_6$ alkylcarbonyl group;
$R^2$ represents a hydrogen atom or a $C_1$-$C_6$ alkyl group;

$R^3$ represents a hydrogen atom, a $C_1$-$C_6$ alkyl group which may be substituted with a substituent selected from Group i, a $C_2$-$C_6$ alkenyl group which may be substituted with a substituent selected from Group i, a $C_2$-$C_6$ alkynyl group which may be substituted with a substituent selected from Group i, a $C_3$-$C_6$ cycloalkyl group which may be substituted with a substituent selected from Group i, a $C_1$-$C_4$ alkoxy group, a $C_1$-$C_4$ alkylamino group, a $C_2$-$C_8$ dialkylamino group, a $C_3$-$C_6$ cycloalkylamino group, a $C_2$-$C_6$ alkoxycarbonyl group, or a $C_2$-$C_6$ alkylcarbonyl group;

$R^4$ represents a hydrogen atom, a $C_1$-$C_6$ alkyl group, a $C_2$-$C_6$ alkenyl group, a $C_2$-$C_6$ alkynyl group, a $C_3$-$C_6$ cycloalkyl group, a $C_1$-$C_6$ haloalkyl group, a cyano group, a halogen atom, a $C_1$-$C_4$ alkoxy group, a $C_1$-$C_4$ haloalkoxy group, or a nitro group;

$R^5$ represents a hydrogen atom, a $C_1$-$C_6$ alkyl group, a $C_1$-$C_6$ haloalkyl group, a $C_2$-$C_4$ alkoxyalkyl group, a cyano group, a $C_1$-$C_4$ hydroxyalkyl group, $COR^9$, $CO_2R^9$, $CONR^9R^{10}$, a halogen atom, a $C_1$-$C_4$ alkoxy group, a $C_1$-$C_4$ haloalkoxy group, $NR^9R^{10}$, $NR^{10}COR^9$, $NR^{10}CO_2R^9$, or $S(O)_nR^{11}$;

$R^6$ represents a hydrogen atom, a $C_1$-$C_6$ alkyl group, a $C_1$-$C_6$ haloalkyl group, a halogen atom, a cyano group, a $C_1$-$C_4$ alkoxy group, or a $C_1$-$C_4$ haloalkoxy group;

$R^7$ represents a $C_1$-$C_6$ alkyl group, a $C_2$-$C_6$ alkenyl group, a $C_2$-$C_6$ alkynyl group, a $C_3$-$C_6$ cycloalkyl group, a $C_1$-$C_6$ haloalkyl group, a $C_2$-$C_6$ haloalkenyl group, a $C_2$-$C_6$ haloalkynyl group, a $C_3$-$C_6$ halocycloalkyl group, a phenyl group which may be substituted with a group selected from Group ii, a benzyl group which may be substituted with a group selected from Group ii, a 5-membered aromatic heterocyclic group which may be substituted with a group selected from Group ii, a 6-membered aromatic heterocyclic group which may be substituted with a group selected from Group ii, a naphthyl group which may be substituted with a group selected from Group ii, an 8-membered aromatic condensed bicyclic heterocyclic group which may be substituted with a group selected from Group ii, a 9-membered aromatic condensed bicyclic heterocyclic group which may be substituted with a group selected from Group ii, or a 10-membered aromatic condensed bicyclic heterocyclic group which may be substituted with a group selected from Group ii;

$R^8$ represents a hydrogen atom, a $C_1$-$C_6$ alkyl group, a $C_1$-$C_6$ haloalkyl group, a halogen atom, a $C_1$-$C_4$ alkoxy group, or a $C_1$-$C_4$ haloalkoxy group;

$R^9$ represents a hydrogen atom, a $C_1$-$C_4$ alkyl group, or a $C_1$-$C_4$ haloalkyl group;

$R^{10}$ represents a hydrogen atom or a $C_1$-$C_4$ alkyl group;

$R^{11}$ represents a $C_1$-$C_4$ alkyl group or a $C_1$-$C_4$ haloalkyl group;

n represents 0, 1 or 2;

Group i consists of a halogen atom, a cyano group, a nitro group, a hydroxy group, a $C_1$-$C_4$ alkoxy group, a $C_1$-$C_4$ haloalkoxy group, a $C_1$-$C_4$ alkylthio group, a $C_1$-$C_4$ alkylsulfinyl group, a $C_1$-$C_4$ alkylsulfonyl group, a $C_2$-$C_6$ alkoxycarbonyl group, a $C_2$-$C_6$ alkylcarbonyl group, a $C_3$-$C_6$ trialkylsilyl group, a phenyl group in which one to three hydrogen atoms may be substituted with a group selected from Group ii, a phenoxy group in which one to three hydrogen atoms may be substituted with a group selected from Group ii, a 5-membered aromatic heterocyclic group in which one to three hydrogen atoms may be substituted with a group selected from Group ii, and a 6-membered aromatic heterocyclic group in which one to three hydrogen atoms may be substituted with a group selected from Group ii; and Group ii consists of a $C_1$-$C_4$ alkyl group, a $C_2$-$C_4$ alkenyl group, a $C_2$-$C_4$ alkynyl group, a $C_3$-$C_6$ cycloalkyl group, a $C_1$-$C_4$ haloalkyl group, a $C_2$-$C_4$ haloalkenyl group, a $C_2$-$C_4$ haloalkynyl group, a $C_3$-$C_6$ halocycloalkyl group, a halogen atom, a cyano group, a nitro group, a $C_1$-$C_4$ alkoxy group, a $C_1$-$C_4$ haloalkoxy group, a $C_1$-$C_4$ alkylthio group, a $C_1$-$C_4$ alkylsulfinyl group, a $C_1$-$C_4$ alkylsulfonyl group, a $C_1$-$C_4$ alkylamino group, a $C_2$-$C_8$ dialkylamino group, a $C_3$-$C_6$ cycloalkylamino group, a $C_4$-$C_8$ (alkyl)(cycloalkyl)amino group, a $C_2$-$C_4$ alkylcarbonyl group, a $C_2$-$C_6$ alkoxycarbonyl group, a $C_2$-$C_6$ alkylaminocarbonyl group, a $C_3$-$C_8$ dialkylaminocarbonyl group, and a $C_3$-$C_6$ trialkylsilyl group.

[2] The pest controlling composition according to claim 1, wherein a weight ratio of the pyrimidine compound represented by Formula (1) to the anthranilamide compound represented by Formula (2) is within a range from 32 : 1 to 1 : 32.

[3] A method for controlling pests, which comprises applying a pyrimidine compound represented by Formula (1):

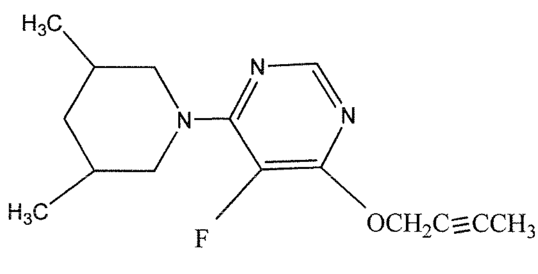

(1)

and an anthranilamide compound represented by Formula (2):

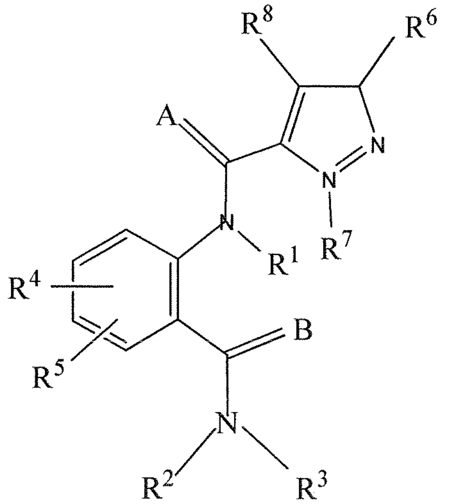

(2)

wherein A, B, $R^1$, $R^2$, $R^3$, $R^4$; $R^5$, $R^6$, $R^7$ and $R^8$ are respectively as defined in [1], to pests or a place where pests inhabit.

[4] Use of a combination of a pyrimidine compound represented by Formula (1):

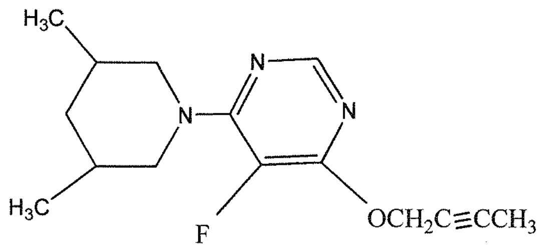

(1)

and an anthranilamide compound represented by Formula (2):

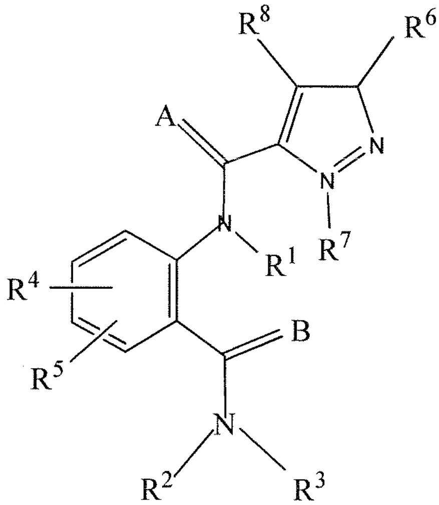

(2)

wherein A, B, $R^1$, $R^2$, $R^3$, $R^4$, $R^5$, $R^6$, $R^7$ and $R^8$ are respectively as defined in [I], for control of pests.

MODE FOR CARRYING OUT THE INVENTION

The pyrimidine compound represented by Formula (1) of the present invention will be described.

The pyrimidine compound represented by Formula (1) is a compound described in JP-A-2005-350353. This compound can be produced, for example, by the method described in the publication.

The anthranilamide compound represented by Formula (2) will be described below. Examples of the substituent in the formula (2) include the following groups.

Examples of the halogen atom include a fluorine atom, a chlorine atom, a bromine atom, and an iodine atom.

Examples of the $C_1$-$C_6$ alkyl group include $C_1$-$C_4$ alkyl groups such as a methyl group, an ethyl group, an n-propyl group, an isopropyl group, an n-butyl group, an isobutyl group, a sec-butyl group, and a tert-butyl group; an n-pentyl group, a pentyl group having a branched chain, an n-hexyl group, and a hexyl group having a branched chain.

Examples of the $C_1$-$C_6$ haloalkyl group include $C_1$-$C_4$ haloalkyl groups such as a trifluoromethyl group, a chloromethyl group, a 2,2,2-trifluoroethyl group, and a 1,1-dichloro-2,2,2-trifluoroethyl group; a fluoropentyl group, a chloropentyl group, a fluorohexyl group, and a chlorohexyl group.

Examples of the $C_2$-$C_6$ alkylcarbonyl group include a methylcarbonyl group, an ethylcarbonyl group, an n-propylcarbonyl group, an isopropylcarbonyl group, an n-butylcarbonyl carbonyl group, an isobutylcarbonyl group, a sec-butylcarbonyl group, a tert-butylcarbonyl group, an n-pentylcarbonyl group, a pentylcarbonyl group having a branched chain, an n-hexylcarbonyl group, and a hexylcarbonyl group having a branched chain.

Examples of the $C_1$-$C_4$ alkylthio group include a methylthio group, an ethylthio group, an n-propylthio group, an isopropylthio group, an n-butylthio group, an isobutylthio group, a sec-butylthio group, and a tert-butylthio group.

Examples of the $C_1$-$C_4$ alkylsulfinyl group include a methylsulfinyl group, an ethylsulfinyl group, an n-propylsulfinyl group, an isopropylsulfinyl group, an n-butylsulfinyl group, an isobutylsulfinyl group, a sec-butylsulfinyl group, and a tert-butylsulfinyl group.

Examples of the $C_1$-$C_4$ alkylsulfonyl group include a methylsulfonyl group, an ethylsulfonyl group, an n-propylsulfonyl group, an isopropylsulfonyl group, an n-butylsulfonyl group, an isobutylsulfonyl group, a sec-butylsulfonyl group, and a tert-butylsulfonyl group.

Examples of the $C_1$-$C_4$ hydroxyalkyl group include a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group.

Examples of the $C_3$-$C_6$ trialkylsilyl group include a trimethylsilyl group, a triethylsilyl group, an n-propyldimethylsilyl group, and a tert-butyldimethylsilyl group.

Examples of the $C_3$-$C_6$ cycloalkyl group include a cyclopropyl group, a cyclobutyl group, a cyclopentyl group, and a cyclohexyl group.

Examples of the $C_3$-$C_6$ halocycloalkyl group include a 3-fluorocyclopentyl group, a 3-chlorocyclopentyl group, a 3-bromocyclopentyl group, a 4-chlorocyclohexyl group, and a 4-bromocyclohexyl group.

Examples of the $C_1$-$C_4$ alkoxy group include a methoxy group, an ethoxy group, an n-propoxy group, an isopropoxy group, an n-butoxy group, an isobutoxy group, a sec-butoxy group, and a tert-butoxy group.

Examples of the $C_1$-$C_4$ haloalkoxy group include a trifluoromethoxy group, a 2,2,2-trichloroethoxy group, a 3,3-difluoropropoxy group, and a 2,2,2-trifluoroethoxy group.

Examples of the $C_2$-$C_6$ alkoxycarbonyl group include a methoxycarbonyl group, an ethoxycarbonyl group, an n-propoxycarbonyl group, an isopropylcarbonyl group, an n-butoxycarbonyl group, an isobutoxycarbonyl group, a sec-butoxycarbonyl group, a tert-butoxycarbonyl group, an n-pentoxycarbonyl group, and a pentoxycarbonyl group having a branched chain.

Examples of the $C_2$-$C_4$ alkoxyalkyl group include a methoxymethyl group, a 1-methoxyethyl group, a 2-methoxyethyl group, an ethoxymethyl group, an n-propoxymethyl group, an isopropoxymethyl group, a 1-ethoxyethyl group, and a 2-ethoxyethyl group.

Examples of the $C_2$-$C_6$ alkenyl group include $C_2$-$C_4$ alkenyl groups such as an ethenyl group, a 1-propenyl group, a 2-propenyl group, a 2-methylpropenyl group, a 1-butenyl group, a 2-butenyl group, and a 3-butenyl group; a heptanyl group and a hexenyl group.

Examples of the $C_2$-$C_6$ haloalkenyl group include $C_2$-$C_4$ haloalkenyl groups such as a 1,1-dichloropropenyl group and a 1-trifluoromethylpropenyl group; a 1-trifluoromethylbutenyl group and a 1-trifluoromethylheptanyl group.

Examples of the $C_2$-$C_6$ alkynyl group include $C_2$-$C_4$ alkynyl groups such as an ethynyl group, a 1-propynyl group, a 2-propynyl group, a 1-butynyl group, a 2-butynyl group, and a 3-butynyl group; a 1-heptanyl group and a 1-hexanyl group.

Examples of the $C_2$-$C_6$ haloalkynyl group include $C_2$-$C_4$ haloalkynyl groups such as a 3-chloropropynyl group, a 3,3,3-trifluoropropynyl group, a 3,3,3-trichloropropynyl group, and a 1-fluoro-2-butynyl group; a fluoroheptanyl group and a fluorohexanyl group.

Examples of the $C_2$-$C_8$ dialkylamino group include a dimethylamino group, a diethylamino group, an ethylmethylamino group, and a diisopropylamino group.

Examples of the $C_3$-$C_6$ cycloalkylamino group include a cyclopropylamino group, a cyclobutylamino group, a cyclopentylamino group, and a cyclohexylamino group.

Examples of the $C_4$-$C_8$ (alkyl)(cycloalkyl)amino group include a methylcyclopentylamino group, an ethylcyclopentylamino group, a methylcyclohexylamino group, and an ethylcyclohexylamino group.

Examples of the $C_2$-$C_6$ alkylaminocarbonyl group include a methylaminocarbonyl group, an ethylaminocarbonyl group, an n-propylaminocarbonyl group, an isopropylaminocarbonyl group, an n-butylaminocarbonyl group, a butylaminocarbonyl group having a branched chain, an n-pentylaminocarbonyl group, a pentylaminocarbonyl group having a branched chain, an n-hexylaminocarbonyl group, and a hexylaminocarbonyl group having a branched chain.

Examples of the $C_3$-$C_8$ dialkylaminocarbonyl group include a dimethylaminocarbonyl group, a diethylaminocarbonyl group, and a diisopropylcarbonyl group.

Examples of the phenyl group in which one to three hydrogen atoms may be substituted with a group selected from Group ii include the following group in which r is an integer of 0 to 3:

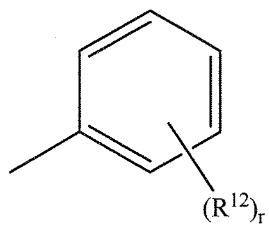

wherein $R^{12}$ represents any one of groups selected from Group ii.

Examples of the phenoxy group in which one to three hydrogen atoms may be substituted with a group selected from Group ii include the following group in which r is an integer of 0 to 3:

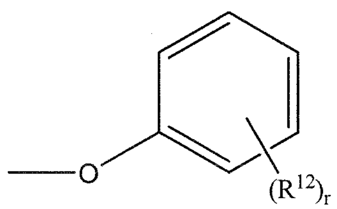

wherein $R^{12}$ is as defined above.

Examples of the benzyl group in which one to three hydrogen atoms may be substituted with a group selected from Group ii include the following group in which r is an integer of 0 to 3:

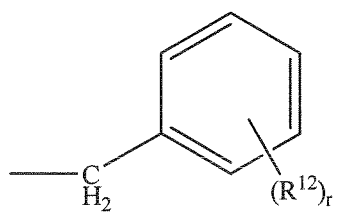

wherein $R^{12}$ is as defined above.

Examples of the 5-membered aromatic heterocyclic group in which one to three hydrogen atoms may be substituted with a group selected from Group ii include the following groups in which r is an integer of 0 to 3:

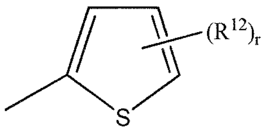
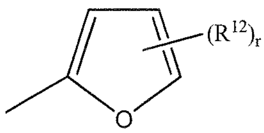
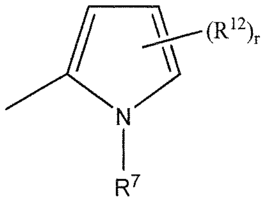
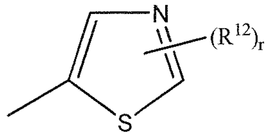

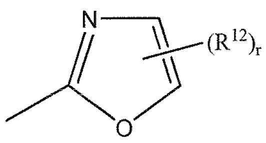
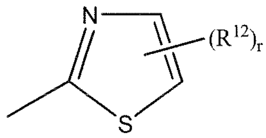
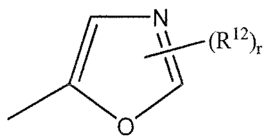
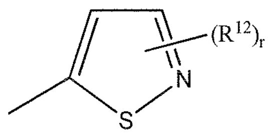

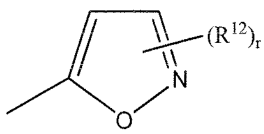
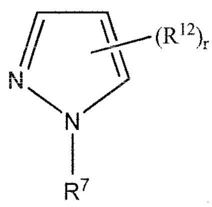
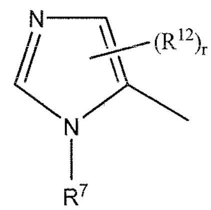
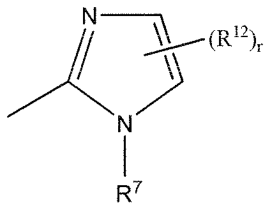

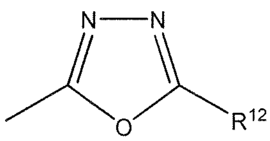
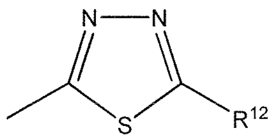
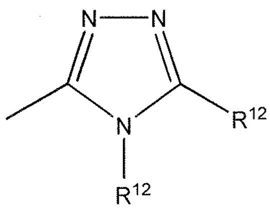
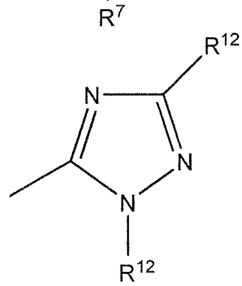

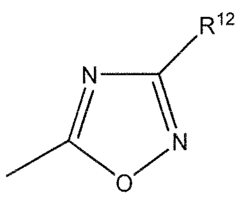
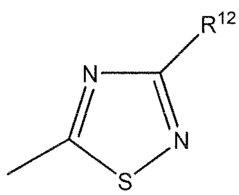
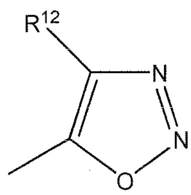
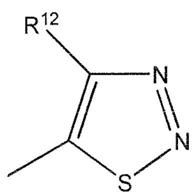

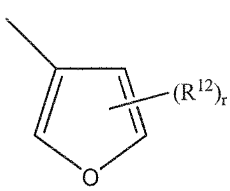
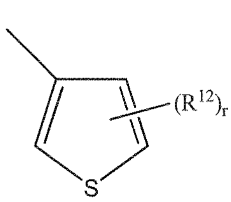
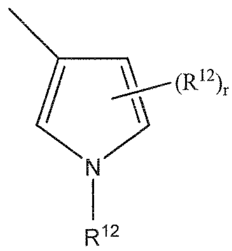
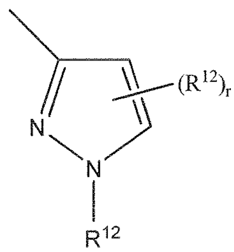

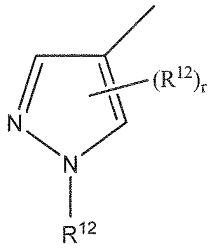
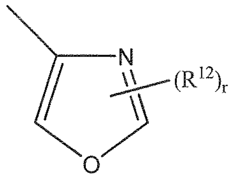
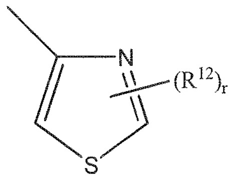
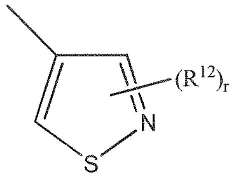

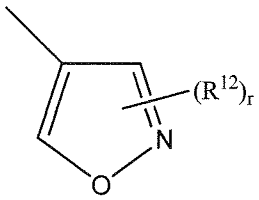
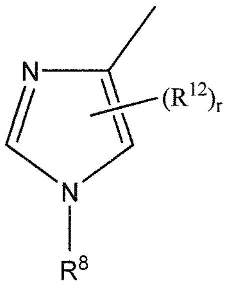
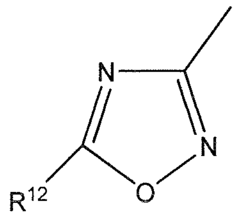
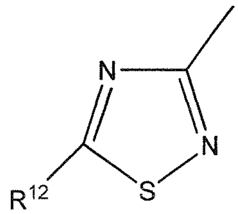

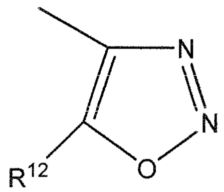
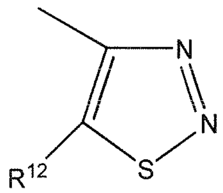
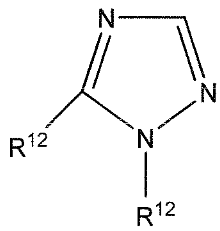

wherein $R^7$, $R^8$ and $R^{12}$ are respectively as defined above.

Examples of the 6-membered aromatic heterocyclic group in which one to three hydrogen atoms may be substituted with a group selected from Group ii include the following groups in which r is an integer of 0 to 3:

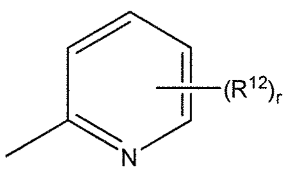
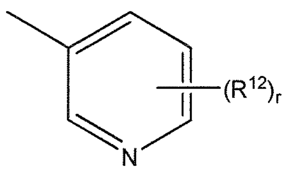
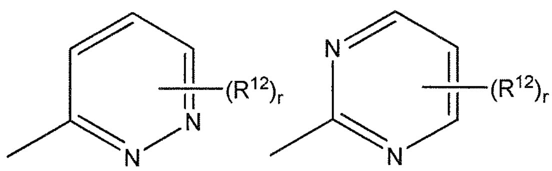

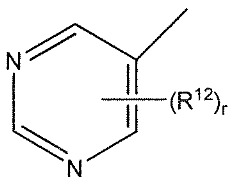
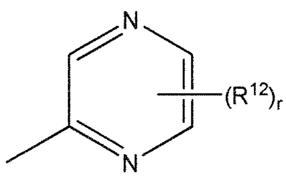
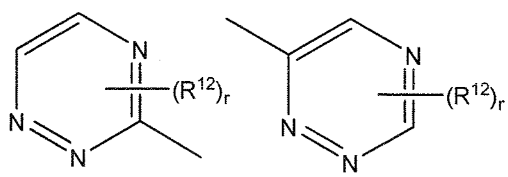

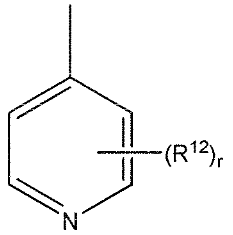

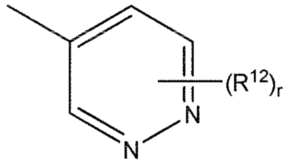

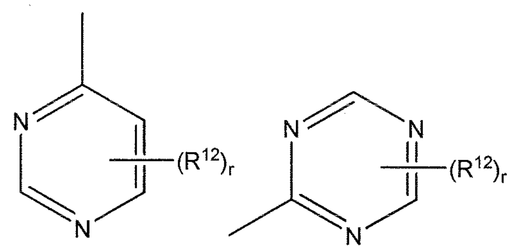

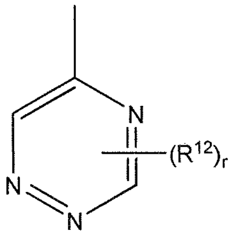

wherein $R^{12}$ is as defined above.

Examples of the naphthyl group in which one to three hydrogen atoms may be substituted with a group selected from Group ii include the following group in which r is an integer of 0 to 3:

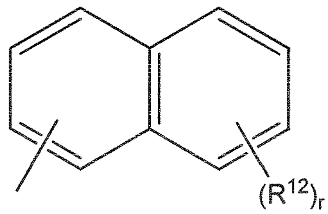

wherein $R^{12}$ is as defined above.

Examples of the 8-membered aromatic condensed bicyclic heterocyclic group in which one to three hydrogen atoms may be substituted with a group selected from Group ii include the following groups in which r is an integer of 0 to 3:

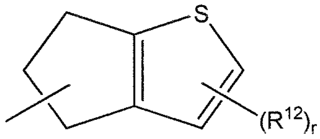

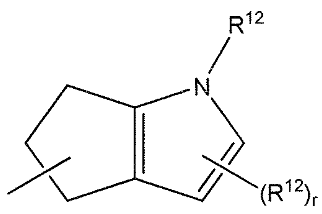

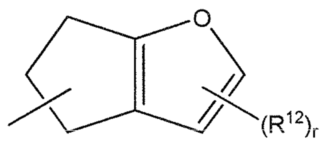

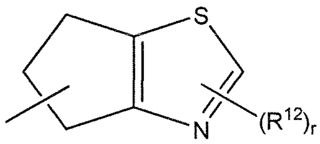

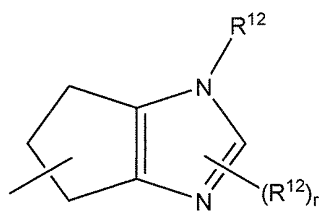

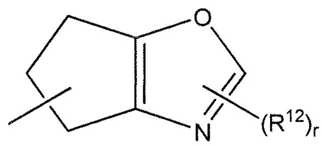

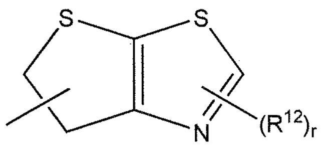
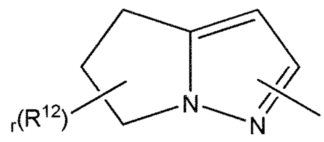

wherein $R^{12}$ is as defined above.

Examples of the 9-membered aromatic condensed bicyclic heterocyclic group in which one to three hydrogen atoms may be substituted with a group selected from Group ii include the following groups in which r is an integer of 0 to 3:

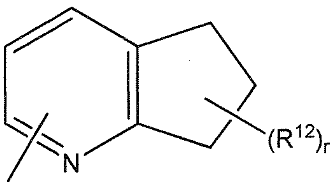
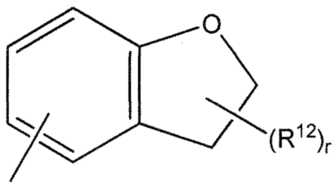
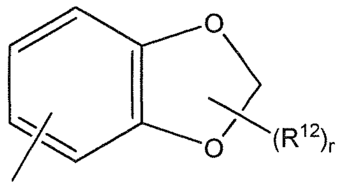

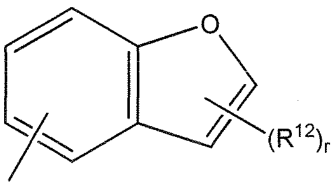
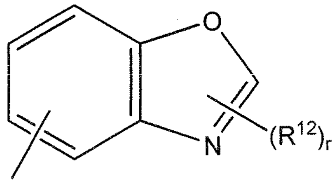
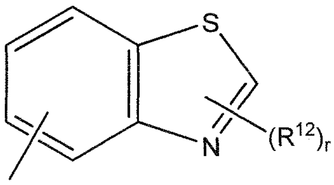

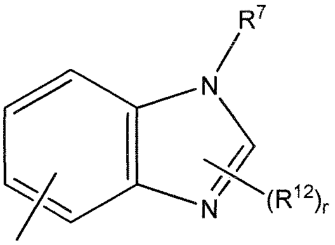
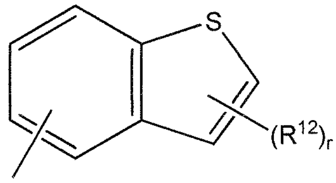
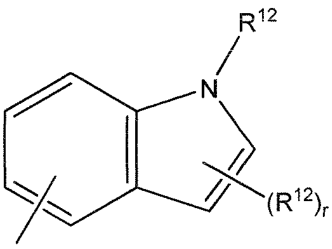

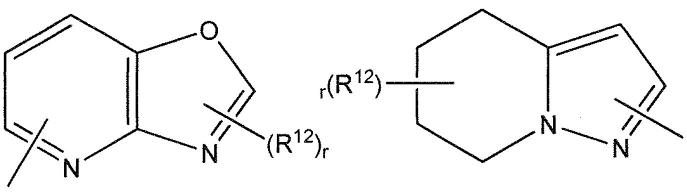

wherein $R^7$ and $R^{12}$ are respectively as defined above.

Examples of the 10-membered aromatic condensed bicyclic heterocyclic group in which one to three hydrogen atoms may be substituted with a group selected from Group ii include the following groups in which r is an integer of 0 to 3:

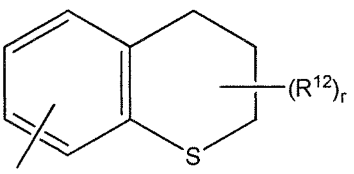
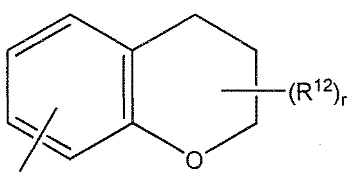
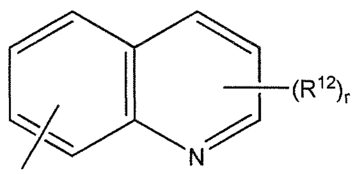

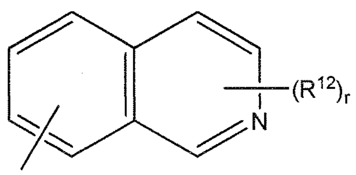
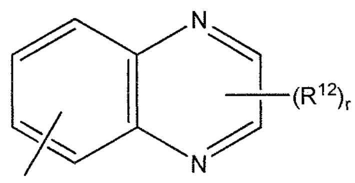
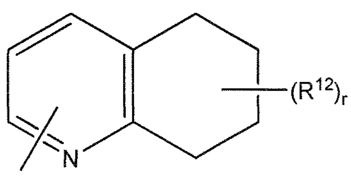

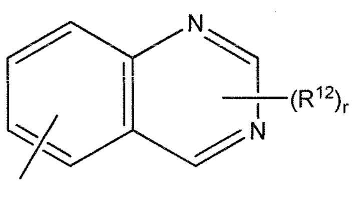
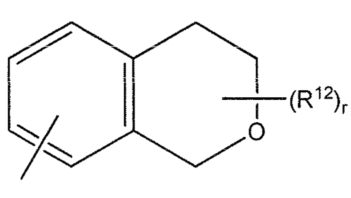
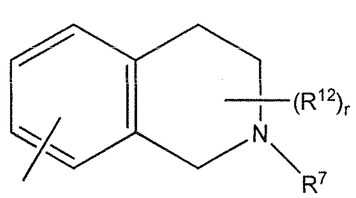

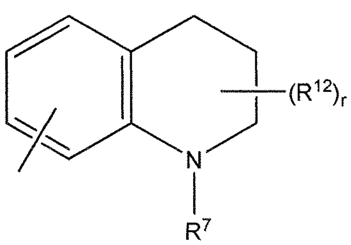
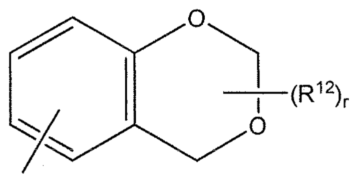
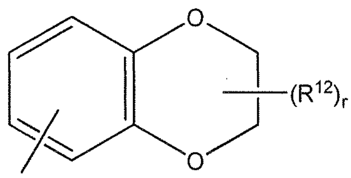

wherein $R^7$ and $R^{12}$ are respectively as defined above.

Examples of the aspect of the anthranilamide compound represented by Formula (2) include the following compounds:

an anthranilamide compound of the formula (2) in which A and B are respectively an oxygen atom, $R^7$ is a group selected from the group consisting of:

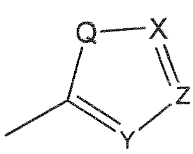
(a)

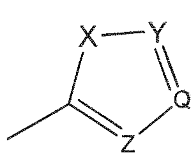
(b)

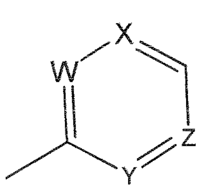
(c)

and

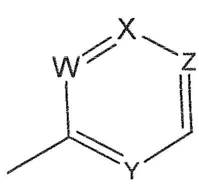
(d)

,

Q is an oxygen atom, a sulfur atom, NH, or $NR^{12}$, W, X, Y and Z are each independently a nitrogen atom, CH, or $CR^{12}$, $R^{12}$ is any group of Group ii, and at least one of W, X, Y and Z is a nitrogen atom in the formula (c) and the formula (d) ;

an anthranilamide compound of the formula (2) in which $R^1$, $R^2$, and $R^8$ are respectively a hydrogen atom, $R^3$ is a halogen atom, a cyano group, a methoxy group, or a $C_1$-$C_4$ alkyl group which may be substituted with $S(O)_pCH_3$, $R^4$ is a methyl group, a trifluoromethyl group, a trifluoromethoxy group, a cyano group, or a halogen atom at the 2-position, $R^5$ is a hydrogen atom, a methyl group, a halogen atom, or a cyano group, $R^6$ is a methyl group, a trifluoromethyl group, or a halogen atom, $R^7$ is a phenyl group which may be substituted with $R^{12}$, or a 2-pyridyl group which may be substituted with $R^{12}$, $R^{12}$ is as defined above, and p is 0, 1 or 2;
an anthranilamide compound of the formula (2) in which $R^3$ is a $C_1$-$C_4$ alkyl group, and $R^6$ is a trifluoromethyl group;
an anthranilamide compound of the formula (2) in which $R^3$ is a $C_1$-$C_4$ alkyl group, and $R^6$ is a chlorine atom or a bromine atom; and
an anthranilamide compound of the formula (2) in which $R^4$ is a methyl group, a chlorine atom, or a bromine atom at the 2-position, $R^5$ is a fluorine atom, a chlorine atom, a bromine atom, an iodine atom, or a cyano group at the 4-position, $R^6$ is a trifluoromethyl group, a chlorine atom, or a bromine atom, and $R^7$ is a 3-chloro-2-pyridinyl group, or a 3-bromo-2-pyridinyl group.

Specific examples of the anthranilamide compound represented by Formula (2) include the following anthranilamide compounds:

an anthranilamide compound of the formula (2) in which A is an oxygen atom, B is an oxygen atom, $R^1$ is a hydrogen atom, $R^2$ is an isopropyl group, $R^3$ is a hydrogen atom, $R^4$ is a methyl group at the 2-position, $R^5$ is a bromine atom at the 4-position, $R^6$ is a trifluoromethyl group, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is a methyl group, $R^3$ is a hydrogen atom, $R^4$ is a methyl group at the 2-position, $R^5$ is a bromine atom at the 4-position, $R^6$ is a trifluoromethyl group, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is an isopropyl group, $R^3$ is a hydrogen atom, $R^4$ is a methyl group at the 2-position, $R^5$ is a bromine atom at the 4-position, $R^6$ is a bromine atom, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is a methyl group, $R^3$ is a hydrogen atom, $R^4$ is a methyl group at the 2-position, $R^5$ is a bromine atom at the 4-position, $R^6$ is a bromine atom, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is an isopropyl group, $R^3$ is a hydrogen atom, $R^4$ is a methyl group at the 2-position, $R^5$ is a bromine atom at the 4-position, $R^6$ is a chlorine atom, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is a methyl group, $R^3$ is a hydrogen atom, $R^4$ is a methyl group at the 2-position, $R^5$ is a bromine atom at the 4-position, $R^6$ is a chlorine atom, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is an isopropyl group, $R^3$ is a hydrogen atom, $R^4$ is a methyl group at the 2-position, $R^5$ is a chlorine atom at the 4-position, $R^6$ is a trifluoromethyl group, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is a methyl group, $R^3$ is a hydrogen atom, $R^4$ is a methyl group at the 2-position, $R^5$ is a chlorine atom at the 4-position, $R^6$ is a trifluoromethyl group, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is an isopropyl group, $R^3$ is a hydrogen atom, $R^4$ is a methyl group at the 2-position, $R^5$ is a chlorine atom at the 4-position, $R^6$ is a bromine atom, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is a methyl group, $R^3$ is a hydrogen atom, $R^4$ is a methyl group at the 2-position, $R^5$ is a chlorine atom at the 4-position, $R^6$ is a bromine atom, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is an isopropyl group, $R^3$ is a hydrogen atom, $R^4$ is a methyl group at the 2-position, $R^5$ is a chlorine atom at the 4-position, $R^6$ is a chlorine atom, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is a methyl group, $R^3$ is a hydrogen atom, $R^4$ is a methyl group at the 2-position, $R^5$ is a chlorine atom at the 4-position, $R^6$ is a chlorine atom, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is an isopropyl group, $R^3$ is a hydrogen atom, $R^4$ is a methyl group at the 2-position, $R^5$ is a chlorine atom at the 4-position, $R^6$ is a 2,2,2-trifluoroethoxy group, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is an isopropyl group, $R^3$ is a hydrogen atom, $R^4$ is a chlorine atom at the 2-position, $R^5$ is a chlorine atom

at the 4-position, $R^6$ is a bromine atom, $R^7$ is a 3-chloro-2-pyridinyl group, and $R^8$ is a hydrogen atom;
an anthranilamide compound of the formula (2) in which A is an oxygen atom, B is an oxygen atom, $R^1$ is a hydrogen atom, $R^2$ is a methyl group, $R^3$ is a hydrogen atom, $R^4$ is a chlorine atom at the 2-position, $R^5$ is a chlorine atom at the 4-position, $R^6$ is a bromine atom, $R^7$ is a 3-chloro-2-pyridyl group, and $R^8$ is a hydrogen atom;
an anthranilamide compound of the formula (2) in which A is an oxygen atom, B is an oxygen atom, $R^1$ is a hydrogen atom, $R^2$ is a methyl group, $R^3$ is a hydrogen atom, $R^4$ is a methyl group at the 2-position, $R^5$ is a chlorine atom at the 4-position, $R^6$ is a 2,2,2-trifluoroethoxy group, $R^7$ is a 3-chloro-2-pyridinyl group, and $R^8$ is a hydrogen atom; and
an anthranilamide compound of the formula (2) in which A is an oxygen atom, B is an oxygen atom, $R^1$ is a hydrogen atom, $R^2$ is a methyl group, $R^3$ is a hydrogen atom, $R^4$ is a methyl group at the 2-position, $R^5$ is a cyano group at the 4-position, $R^6$ is a bromine atom, $R^7$ is a 3-chloro-2-pyridinyl group, and $R^8$ is a hydrogen atom.

Although a stereoisomer such as an optical isomer based on an asymmetric carbon atom, or an isomer such as a tautomer may exist in the anthranilamide compound represented by Formula (2), any of the above isomers can be used alone, or a mixture having any isomer ratio can be used in the present invention.

The anthranilamide compound represented by Formula (2) is a compound described in Japanese Examined Patent Publication Nos. 2004-538327, 2004-538328 and the like. This compound can be produced, for example, by the method described in the publications.

The pest controlling composition according to the present invention contains, as active ingredients, the pyrimidine compound represented by Formula (1) and the anthranil compound represented by Formula (2).

In the pest controlling composition according to the present invention, a weight ratio of the pyrimidine compound represented by Formula (1) to the anthranilamide compound represented by Formula (2) (= above pyrimidine compound : above anthranilamide compound) is usually within a range from 200 : 1 to 1 : 200, preferably from 32 : 1 to 1 : 32, and more preferably from 5 : 1 to 1 : 1.

The pest controlling composition according to the present invention may be prepared by merely mixing the pyrimidine compound represented by Formula (1) with the anthranil compound represented by Formula (2), but is usually a formulation. For example, formulations such as oil solutions, emulsifiable concentrates, flowable formulations, wettable powders, granular wettable powders, dusts, and granules can be obtained by mixing the pyrimidine compound represented by Formula (1), the anthranil compound represented by Formula (2) and an inert carrier, and optionally adding surfactants and other adjuvants for formulation.

In the pest controlling composition according to the present invention, the total amount of the pyrimidine compound represented by Formula (1) and the anthranil compound represented by Formula (2) is usually within a range from 0.05 to 95% by weight, and preferably from 1 to 90% by weight.

Examples of the solid carrier used in the formulation include fine powers and granules of minerals such as kaolin clay, attapulgite clay, bentonite, montmorillonite, acid clay, pyrophyllite, talc, diatomaceous earth, and calcite; natural organic substances such as corncob powder and walnut shell powder; synthetic organic substances such as urea; salts such as calcium carbonate and ammonium sulfate; and synthetic inorganic substances such as synthetic hydrous silicon oxide. Examples of the liquid carrier include aromatic hydrocarbons such as xylene, alkylbenzene, and methylnaphthalene; alcohols such as 2-propanol, ethylene glycol, propylene glycol, and ethylene glycol monoethyl ether; ketones such as acetone, cyclohexanone, and isophorone; vegetable oils such as soybean oil and cottonseed oil; petroleum-based aliphatic hydrocarbons; esters; dimethylsulfoxide; acetonitrile; and water. Examples of the gaseous carrier include fluorocarbon, a butane gas, a liquefied petroleum gas (LPG), dimethylether, and carbon dioxide.

Examples of the surfactant include anionic surfactants such as alkylsulfuric acid ester salt, alkylarylsulfonic acid salt, dialkylsulfosuccinic acid salt, polyoxyethylene alkylaryl ether phosphoric acid ester salt, ligninsulfonic acid salt, and naphthalenesulfonate polycondensed with formaldehyde; nonionic surfactants such as polyoxyethylene alkyl aryl ether, a polyoxyethylene-alkylpolyoxypropylene block copolymer, and sorbitan fatty acid ester; and cationic surfactants such as alkyltrimethyl ammonium salt.

Examples of the other adjuvants for formulation include water-soluble polymers such as polyvinyl alcohol and polyvinyl pyrrolidone; gum arabic; alginic acid and a salt thereof; polysaccharides such as carboxymethyl cellulose (CMC) and xanthan gum; inorganic substances such as aluminum magnesium silicate and alumina sol; preservatives; colorants; and stabilizing agents such as isopropyl acidic phosphate (PAP) and BHT.

The pest controlling composition according to the present invention can protect crops from infestation due to pests (for example, noxious arthropods such as noxious insects and noxious mites) which cause infestation such as feeding and sapping to the following crops.

Examples of pests on which the pest controlling composition according to the present invention exerts a control effect include:

Hemiptera pests: planthoppers such as Laodelphax striatellus, Nilaparvata lugens, and Sogatella furcifera, leafhoppers such as Nephotettix cincticeps and Nephotettix virescens, aphids such as Aphis gossypii, Myzus persicae,

Brevicoryne brassicae, Macrosiphum euphorbiae, Aulacorthum solani, Rhopalosiphum padi, and Toxoptera citricidus, plant bugs such as Nezara antennata, Riptortus clavetus, Leptocorisa chinensis, Eysarcoris parvus, Halyomorpha mista, and Lygus lineolaris, whiteflies such as Trialeurodes vaporariorum, Bemisia tabaci, and Bemisia argentifolii, scales such as Aonidiella aurantii, Comstockaspis perniciosa, Unaspis citri, Ceroplastes rubens, Icerya purchasi, Pseudaulacapsis pentagona, lace bugs and suckers;
Lepidoptera pests: Pyralidae such as Chilo suppressalis, Tryporyza incertulas, Cnaphalocrocis medinalis, Notarcha derogata, Plodia interpunctella, Ostrinia furnacalis, Ostrinia nubilaris, Hellula undalis, and Pediasia teterrellus, Noctuidae such as Spodoptera litura, Spodoptera exigua, Pseudaletia separata, Mamestra brassicae, Agrotis ipsilon, Plusia nigrisigna, Trichoplusia spp., Heliothis spp., and Helicoverpa spp., Pieridae such as Pieris rapae, Tortricidae such as Adoxophyes spp., Grapholita molesta, Leguminivora glycinivorella, Matsumuraeses azukivora, Adoxophyes orana fasciata, Adoxophyes sp., Homona magnanima, Archips fuscocupreanus, and Cydia pomonella, Gracillariidae such as Caloptilia theivora and Phyllonorycter ringoneella, Carposinidae such as Carposina niponensis, Lyonetiidae such as Lyonetia spp., Lymantriidae such as Lymantria spp. and Euproctis spp., Yponameutidae such as Plutella xylostella, Gelechiidae such as Pectinophora gossypiella and Phthorimaea operculella, Arctiidae such as Hyphantria cunea, Tineidae such as Tinea translucens and Tineola bisselliella;
Thripidae pests: thrips such as Frankliniella occidentalis, Thrips parmi, Scirtothrips dorsalis, Thrips tabaci, Frankliniella intonsa, and Frankliniella fusca;
Diptera pests: Musca domestica, Culex popiens pallens, Tabanus trigonus, Hylemya antiqua, Hylemya platura, Anopheles sinensis, Agromyzidae such as Agromyza oryzae, Hydrellia griseola, Chlorops oryzae, Liriomyza trifolii, Dacus cucurbitae, and Ceratitis capitata;
Coleoptera pests: Epilachna vigintioctopunctata, Aulacophora femoralis, Phyllotreta striolata, Oulema oryzae, Echinocnemus squameus, Lissorhoptrus oryzophilus, Anthonomus grandis, Callosobruchus chinensis, Sphenophorus venatus, Popillia japonica, Anomala cuprea, Diabrotica spp., Leptinotarsa decemlineata, Agriotes spp., Lasioderma serricorne, Anthrenus verbasci, Tribolium castaneum, Lyctus brunneus, Anoplophora malasiaca, Tomicus piniperda and the like;
Orthoptera pests: Locusta migratoria, Gryllotalpa africana, Oxya yezoensis, Oxya japonica, and the like;
Hymenoptera pests: Athalia rosae, Acromyrmex spp., Solenopsis spp., and the like;
Blattidae pests: Blattella germanica, Periplaneta fuliginosa, Periplaneta americana, Periplaneta brunnea, Blatta orientalis, and the like;
Acarina pests: Tetranychidae such as Tetranychus urticae, Panonychus citri, and Oligonychus spp., Eriophyidae such as Aculops pelekassi, Tarsonemidae such as Polyphagotarsonemus latus, Tenuipalpidae, Tuckerellidae, Acaridae such as Tyrophagus putrescentiae, Dermanyssidae such as Dermatophagoides farinae and Dermatophagoides ptrenyssnus, Cheyletidae such as Cheyletus eruditus, Cheyletus malaccensis, and Cheyletus moorei, and the like;
Nematodes: Aphelenchoides besseyi, Nothotylenchus acris, and the like.

The control method of the present invention is a method of applying an effective amount of the pyrimidine compound represented by Formula (1) and the anthranil compound represented by Formula (2) to pests or a place where pests inhabit (crops, soil, etc.).

In the present description, even if each amount of these compounds is an amount that does not enable the control of pests when only one of them is applied, the amount, that enables the control of pests when both the compounds are applied, corresponds to an effective amount.

Examples of the place where pests inhabit include crops and the soil on which crops are cultivated. In the case the compounds are applied to the above crops, examples of the subject crop include foliage of crops, seeds of crops, and bulbs of crops. Herein, bulbs mean scaly bulb, solid bulb, root stock, stem tuber, root tuber, and rhizophore.

In the present invention, the pyrimidine compound represented by Formula (1) and the anthranil compound represented by Formula (2) may be separately applied at different time points, or may be separately applied at the same time as long as a control effect due to combination of them is exerted. From the viewpoint of ease of application, they are usually applied as the pest controlling composition of the present invention.

Specific examples of the control method of the present invention include a treatment to foliage of crops, such as foliage spraying; a treatment to plantation of crops, such as a soil treatment; a treatment to seeds, such as seed disinfection or seed coating; and a treatment to bulbs, such as seed tuber.

Specific examples of a treatment to foliage of the above crops include a treatment method of applying the composition to surfaces of crops, such as foliage spraying and trunk spraying.

Examples of the soil treatment method include spraying to the soil, soil incorporation, and irrigation of a chemical solution to the soil (irrigation of chemical solution, soil injection, and chemical solution drip). Examples of the place to be treated include planting hole, row, around a planting hole, around a row, entire surface of cultivation lands, ground side part of crops, interval between roots, under trunk, main trunk, earthing up, seedling raising box, seedling raising tray and seedbed. Examples of the treating time point include before seeding, at the time of seeding, immediately after

seeding, raising period, before fix planting, at the time of fix planting, and growing period after fix planting. In the above soil treatment, crops may be simultaneously treated with active ingredients, and a solid fertilizer such as a paste fertilizer containing active ingredients may also be applied to the soil. It is also possible to mix the active ingredients with an irrigation liquid, and examples thereof include irrigation into irrigation facilities (irrigation tube, irrigation pipe, sprinkler, etc.), mixing with an interrow inundation liquid, and mixing with a water culture medium. Alternatively, an irrigation liquid can be mixed with active ingredients in advance and a treatment can be performed using the above irrigation method, or another proper irrigation method such as sprinkling or inundation.

The method for a treatment to the seeds is, for example, a method of treating seeds and bulbs of plants to be protected from pests with the pest controlling composition of the present invention. Specific examples of the method include a spray treatment in which a suspension of the pest controlling composition of the present invention is sprayed onto seed surfaces or bulb surfaces in a mist form; a smearing treatment in which a wettable powder, an emulsifiable concentrate or a flowable formulation of the pest controlling composition of the present invention is smeared on seeds or bulbs after adding a small amount of water thereto or as it is; an immersion treatment in which seeds are immersed in a solution of the pest controlling composition of the present invention for a given time; a film coating treatment; and a pellet coating treatment.

When crops are subjected to a foliage treatment with the pyrimidine compound represented by Formula (1) and the anthranil compound represented by Formula (2) or the soil is treated with these compounds, the amount varies according to the kind of crops to be subjected to the control, kind of pests to be controlled, degree of incidence of pests to be controlled, formulation form, treatment period, meteorological conditions and the like. The total amount of the pyrimidine compound represented by Formula (1) and the anthranil compound represented by Formula (2) (hereinafter referred to as an amount of the present active ingredients) is usually from 0.1 to 1,000 g, and preferably from 10 to 500 g, per 10,000 $m^2$ of the soil.

In the case of an emulsifiable concentrate, a wettable powder or a flowable formulation, the treatment is usually conducted by spraying after dilution with water. In this case, the total concentration of the present active ingredients is usually from 1 to 10,000 ppm, and preferably from 10 to 500 ppm. In the case of a dust or a granule, the treatment is usually conducted without dilution.

In the treatment to seeds, the application is usually conducted with the amount of the present active ingredients within a range from 0.001 to 20 g, and preferably from 0.01 to 10 g, per 1 kg of seeds.

The pest controlling method of the present invention can be used in crop lands or non-crop lands, such as upland field, paddy field, lawn and orchard where the following crops are cultivated.

Agricultural crops: corn, rice, wheat, barley, rye, oat, sorghum, cotton, soybean, peanut, sarrazin, sugar beet, rapeseed, sunflower, sugar cane, tobacco and the like;

Vegetables: Solanaceae vegetables (eggplant, tomato, green pepper, hot pepper, potato, etc.), Cucurbitaceae vegetables (cucumber, pumpkin, zucchini, watermelon, melon, squash, etc.), Cruciferae vegetables (Japanese radish, turnip, horseradish, kohlrabi, Chinese cabbage, cabbage, brown mustard, broccoli, cauliflower, etc.), Compositae vegetables (burdock, garland chrysanthemum, artichoke, lettuce, etc.), Liliaceae vegetables (Welsh onion, onion, garlic, asparagus, etc.), Umbelliferae vegetables (carrot, parsley, celery, parsnip, etc.), Chenopodiaceae vegetables (spinach, Swiss chard, etc.), Labiatae vegetables (Japanese basil, mint, basil, etc.), strawberry, sweat potato, yam, aroid, etc.;
Ornamental flowers;
Ornamental foliage plants;
Lawns;
Fruit trees: pomaceous fruits (apple, common pear, Japanese pear, Chinese quince, quince, etc.), stone fleshy fruits (peach, plum, nectarine, Japanese plum, yellow peach, apricot, prune, etc.), citrus plants (Satsuma mandarin, orange, lemon, lime, grapefruit, etc.), nuts (chestnut, walnut, hazel nut, almond, pistachio, cashew nut, macadamia nut, etc.), berry fruits (blueberry, cranberry, blackberry, raspberry, etc.), grape, persimmon, olive, loquat, banana, coffee, date, coconut, etc.; and

Trees other than fruit trees: tea, mulberry, flowering trees and shrubs, street trees (ash tree, birch, dogwood, eucalyptus, ginkgo, lilac, maple tree, oak, poplar, cercis, Chinese sweet gum, plane tree, zelkova, Japanese arborvitae, fir tree, Japanese hemlock, needle juniper, pine, spruce, yew).

The above "cops" also include those provided with resistance to herbicides, including HPPD inhibitors such as isoxaflutole; ALS inhibitors such as imazethapyr and thifen sulfuronmethyl; EPSP synthetase inhibitors; glutamine synthetase inhibitors; bromoxynil, and dicamba by way of a classical breeding method or a genetic engineering technology.

Examples of the "crops" having resistance given by a classic breeding technique include Clearfield (trade mark) canola which is resistant to imidazolinone herbicides such as imazethapyr, and STS soybean which is resistant to sulfonylurea ALS inhibitor herbicides such as tifensulfuron methyl.

Examples of the "crops" having resistance given by a genetic engineering technology include corn, soybean, cotton and rapeseed having resistance to glyphosate or glufosinate, which have been already on the market under the product names of Roundup Ready (trade mark), Roundup Ready 2 (trade mark), Liberty Link (trade mark) and the like.

The above "crops" also include those which can express toxins using a genetic engineering technology.

Examples of the toxins expressed in such genetically modified crops include insecticidal proteins derived from Bacillus cereus and Bacillus popilliae; δ-endotoxins derived from Bacillus thuringiensis, e.g. Cry1Ab, Cry1Ac, Cry1F Cry1Fa2, Cry2Ab, Cry3A, Cry3Bb1 and Cry9C, and insecticidal proteins such as VIP1, VIP2, VIP3 and VIP3A; insecticidal toxins derived from nematodes; toxins produced by animals, such as scorpion toxin, spider toxin, bee toxin and insect-specific neurotoxins; filamentous fungi toxins; plant lectins; agglutinin; protease inhibitors such as trypsin inhibitors, serine protease inhibitor, patatin, cystatin and papain inhibitors; ribosome-inactivating proteins (RIPs) such as ricin, corn-RIP, abrin, rufin, sapolin and priodin; steroid metabolic enzymes such as 3-hydroxysteroid oxidase, ecdysteroid-UDP-glucosyltransferase and cholesterol oxidase; ecdysone inhibitors; HMG-COA reductase; ion channel inhibitors such as a sodium channel inhibitors and calcium channel inhibitors; juvenile hormone esterase; diuretic hormone receptors; stilbene synthetase; bibenzyl synthetase; chitinase; and glucanase.

The toxins expressed in such genetically modified crops include δ-endotoxin proteins such as Cry1Ab, Cry1Ac, Cry1F Cry1Fa2, Cry2Ab, Cry3A, Cry3Bb1 and Cry9C, hybrid toxins of insecticidal proteins such as VIP1, VIP2, VIP3 and VIP3A, partially deficient toxins, and modified toxins. The hybrid toxins are fabricated by a novel combination of the different domains of such proteins, using a genetic engineering technology. The known partially deficient toxin is Cry1Ab, in which a part of amino acid sequence is deficient. In modified toxins, one or more amino acids of a natural toxin are replaced.

Examples of such toxins and genetically modified crops capable of synthesizing such toxins are described in EP-A-0 374 753, WO 93/07278, WO 95/34656, EP-A-0 427 529, EP-A-451 878, WO 03/052073 and the like.

The toxins contained in such genetically modified crops impart resistance to insect pests of Coleoptera, insect pests of Diptera, and insect pests of Lepidoptera to the crops.

It has already been known that there are genetically modified crops containing one or more insecticidal pest-resistant genes and capable of expressing one or more toxins. Some of them are commercially available. Examples of such genetically modified crops include YieldGard (trade mark) (corn cultivar expressing a Cry1Ab toxin), YieldGard Rootworm (trade mark) (corn cultivar expressing a Cry3Bb1 toxin), YieldGard Plus® (corn cultivar expressing Cry1Ab and Cry3Bb1 toxins), Herculex I (trade mark) (corn cultivar expressing phosphinotrysin N-acetyltransferase (PAT) for imparting resistance to a Cry1Fa2 toxin and Glufosinate), NuCOTN33B (trade mark) (cotton cultivar expressing a Cry1Ac toxin), Bollgard I (trade mark) (cotton cultivar expressing a Cry1Ac toxin), Bollgard II (trade mark) (cotton cultivar expressing Cry1Ab and Cry2Ab toxins), VIPCOT (trade mark) (cotton cultivar expressing a VIP toxin), NewLeaf (trade mark) (potato cultivar expressing a Cry3A toxin), NatureGard (trade mark), Agrisure (trade mark) GT Advantage (GA21 Glyphosate resistant property), Agrisure (trade mark) CB Advantage (Bt11 corn borer (CB) property), and Protecta (trade mark).

The above "crops" include those provided with a capacity of producing an anti-pathogenic substance having selective activity, using a genetic engineering technology.

As the anti-pathogenic substance, for example, PR proteins are known (PRPs). These anti-pathogenic substances and genetically modified crops producing them are described in EP-A-0 392 225, WO 95/33818, and EP-A-0 353 191.

Examples of anti-pathogenic substances expressed in such genetically modified crops include ion channel inhibitors such as sodium channel inhibitors and calcium channel inhibitors (KP1, KP4 and KP6 toxins and the like produced by viruses are known); stilbene synthase; bibenzyl synthase; chitinase; glucanase; PR proteins; anti-pathogenic substances produced by microorganisms such as peptide antibiotics, antibiotics having a heterocycle, and protein factors relating to resistance against palant pathogens (described in WO 03/000,906).

The above "crops" include lines provided with two or more kinds of properties of parent lines by mating genetically modified crops having lines provided with two or more kinds of characters associated with the above-described herbicidal resistance, pest resistance, disease resistance and the like, and same or different properties, using a classical breeding method or a genetic engineering technology.

EXAMPLES

The present invention will be descried in more detail below by way of formulation examples and test examples, but the present invention is not limited only to the following examples. In the following examples, "part(s)" is by weight unless otherwise specified. The compound represented by Formula (1) is referred to as a compound (1), and the compound represented by Formula (2) is referred to as a compound (2).

Reference Example 1: Production of compound (2a)

After mixing 14.0 g of 2-[3-bromo-1-(3-chloro-2-pyridinyl)-1H-pyrazol-5-yl]-6-chloro-8-methyl-4H-3,1-benzoxazin-4-one with 200 ml of tetrahydrofuran, 12 g of a methanol solution of 40% methylamine was added dropwise at room

temperature, followed by stirring for 4 hours and a half. The reaction mixture was mixed with water and ethyl acetate and then subjected to liquid separation. After the organic layer was washed with water, it was dried over sodium sulfate and concentrated under reduced pressure. The obtained residue was washed with methyl tert-butyl ether and ethyl acetate to obtain 10.09 g of the compound (2a) represented by the following formula (2a).

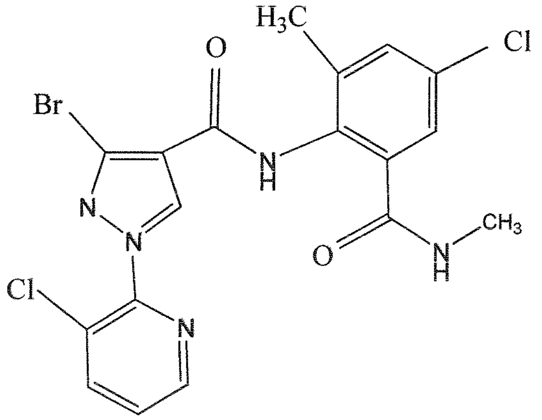

(2a)

Compound (2a)

$^1$H-NMR(DMSO-d6)δ(ppm):2.15(3H,s),2.60-2.73(3H,m),7.34(1H,d,J = 2Hz),7.38(1H,s),7.47(1H, d, J = 2Hz), 7.61(1H, dd, J = 8Hz, 5Hz), 8.17(1H, dd, J = 8Hz,2Hz),8.26(1H,brs),8.50(1H, dd, J = 5Hz,2Hz),10.52(1H,s) Reference Example 2: Production of compound (2b)

After mixing 2.22 g of 2-[3-bromo-1-(3-chloro-2-pyridinyl)-1H-pyrazol-5-yl]-6-cyano-8-methyl-4H-3,1-benzoxazin-4-one with 20 ml of tetrahydrofuran, the obtained mixture was cooled to -40°C. To the mixture, 3 ml of a tetrahydrofuran solution of 2 M methylamine was added dropwise, followed by heating to -20°C and further stirring at -20°C for 10 minutes. Then, 20 ml of 10% citric acid and 10 ml of water were poured into the reaction mixture, followed by stirring at 0°C for 10 minutes. The precipitated crystal was filtered and the obtained filter cake was washed with 30 ml of water and 15 ml of acetonitrile to obtain 1.85 g of the compound (2b) represented by the following formula (2b).

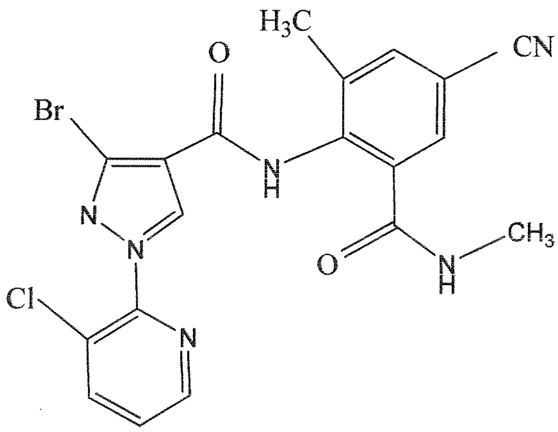

(2b)

Compound (2b)

$^1$H-NMR(DMSO-d6)δ(ppm):2.21(3H, s), 2.64-2.71(3H,m),7.41(1H,s),7.61(1H,dd,J = 8Hz,5Hz),7.75-7.78(1H, m),7.88(1H,brs),8.17(1H,dd,J = 8Hz,2Hz),8.34-8.43(1H,m),8.50(1H, dd, J = 5Hz,2Hz), 10.52(1H,s) Formulation Example 1: Emulsifiable concentrate (compound (1) : compound (2) = 1 : 1)

After dissolving 9 parts of the compound (1) and 9 parts of the compound (2a) or compound (2b) in 33.5 parts

of xylene and 33.5 parts of dimethylformamide, 10 parts of polyoxyethylene styryl phenyl ether and 5 parts of calcium dodecylbenzene sulfonate are added thereto, followed by thoroughly mixing with stirring to obtain an emulsifiable concentrate.

Formulation Example 2: Wettable powder (compound (1) : compound (2) = 1 : 2)

The compound (1) (3 parts) and 6 parts of the compound (2a) or compound (2b) are added in a mixture of 4 parts of sodium lauryl sulfate, 2 parts of calcium ligninsulfonate, 20 parts of a synthetic hydrated silicon oxide fine powder and 65 parts of diatomaceous earth, followed by thoroughly mixing with stirring to obtain a wettable powder.

Formulation Example 3: Dust (compound (1) : compound (2) = 8 : 1)

The compound (1) (4 parts), 0.5 parts of the compound (2a) or compound (2b), 1 part of a synthetic hydrated silicon oxide fine powder, 1 part of DRILESS B (manufactured by Sankyo Co., Ltd.) as an aggregating agent and 7 parts of clay are thoroughly mixed in a mortar, followed by mixing with stirring using a juice mixer. To the obtained mixture, 86.5 parts of cut clay is added, followed by thoroughly mixing with stirring to obtain a dust.

Formulation Example 4: Flowable formulation (compound (1) : compound (2) = 4 : 1)

Polyoxyethylene styryl phenyl ether sulfate salt (5 parts), 20 parts of an aqueous 1% xanthan gum solution, 3 parts of smectite-based mineral and 62 parts of water are uniformly dissolved, and 8 parts of the compound (1) and 2 parts of the compound (2a) or compound (2b) are added, followed by thoroughly stirring and further wet grinding using a sand mill to obtain a flowable formulation. Formulation Example 5: Microcapsule (compound (1) : compound (2) = 2 : 1)

After mixing 6 parts of the compound (1), 3 parts of the compound (2a) or compound (2b), 10 parts of phenylxylethane and 0.5 parts of Sumidule L-75 (tolylene diisocyanate, manufactured by Sumika Bayer Urethane Co., Ltd.), the obtained mixture is added in 20 parts of an aqueous 10% solution of gum arabic, followed by stirring using a homomixer to obtain an emulsion having an average particle diameter of 20 μm. To the emulsion, 2 parts of ethylene glycol is added and further the reaction is carried out in a warm bath of 60°C for 24 hours to obtain a microcapsule slurry. Separately, 0.2 parts of xanthan gum and 1 part of Veegum R (aluminum magnesium silicate, manufactured by Sanyo Chemical Industries, Ltd.) are dispersed in 57.3 parts of ion-exchange water to obtain a thickener solution. The microcapsule slurry (42.5 parts) and 57.5 parts of the thickener solution are mixed to obtain a 10% microcapsule.

Formulation Example 6: Oil solution (compound (1) : compound (2) = 3 : 1)

The compound (1) (0.6 parts) and 0.2 parts of the compound (2a) or compound (2b) are dissolved in 5 parts of xylene and 5 parts of trichloroethane, and the obtained solution is mixed with 89.2 parts of deodorized kerosene to obtain an oil solution.

Formulation Example 7: Granule (compound (1) : compound (2) = 2 : 1)

The compound (1) (2 parts) and 1 part of the compound (2a) or compound (2b) are added to 5 parts of a synthetic hydrated silicon oxide fine powder, 5 parts of sodium dodecylbenzene sulfonate, 30 parts of bentonite and 57 parts of clay and, after thoroughly mixing with stirring, a suitable amount of water is added to the mixture. The mixture is further stirred, granulated by a granulating machine and then subjected to through circulation drying to obtain a granule.

Test Example 1

The compound (1) (10 parts) was dissolved in 40 parts of xylene and 40 parts of dimethylformamide, and 10 parts of Sorpol 3005X (manufactured by TOHO Chemical Industry Co., Ltd.) was added thereto, followed by thoroughly mixing with stirring to prepare a formulation.

The compound (2a) or compound (2b) (10 parts) was dissolved in 40 parts of xylene and 40 parts of dimethylformamide, and 10 parts of Sorpol 3005X (manufactured by TOHO Chemical Industry Co., Ltd.) was added thereto, followed by thoroughly mixing with stirring to prepare a formulation.

To a water dilution having a predetermined concentration of the formulation of the compound (1), the formulation of the compound (2a) or compound (2b) was added so as to give a predetermined concentration to obtain dilutions, and then a spreading agent (New Rinou: manufactured by Nihon Nohyaku Co., Ltd.) was added thereto so that an additive amount of the spreading agent became 1/5,000 in terms of the volume to prepare a test spray solution.

To each of a water dilution having a predetermined concentration of the formulation of the compound (1) and

a water dilution having a predetermined concentration of the formulation of the compound (2a) or compound (2b), a spreading agent (New Rinou: manufactured by Nihon Nohyaku Co., Ltd.) was added so that an additive amount of the spreading agent became 1/5,000 in terms of the volume to prepare a comparative test spray solution.

The concentration of active ingredients of each spray solution is as follows.

| | Compounds | Concentration of active ingredients (ppm) |
|---|---|---|
| Example 1 | Compound (1) + Compound (2a) | 50 + 12.5 |
| Example 2 | Compound (1) + Compound (2a) | 50 + 50 |
| Example 3 | Compound (1) + Compound (2b) | 12.5 + 0.8 |
| Example 4 | Compound (1) + Compound (2b) | 12.5 + 1.6 |
| Comparative Example 1 | Compound (1) | 50 |
| Comparative Example 2 | Compound (1) | 12.5 |
| Comparative Example 3 | Compound (2a) | 12.5 |
| Comparative Example 4 | Compound (2a) | 50 |
| Comparative Example 5 | Compound (2b) | 0.8 |
| Comparative Example 6 | Compound (2b) | 1.6 |

1% agar (3 ml) was poured into a cup made of glass measuring 2.6 cm in inner diameter and 4.5 cm in height and a cabbage leaf disc which had been immersed in the above test solution for 30 seconds was allowed to stand thereon, and then about 20 adult sweetpotato whiteflies (Bemisia tabaci Gennadius) were made parasized. Two days after, life or death of adult sweetpotato whiteflies was discriminated and mortality was determined by the following equation.

$$\text{Mortality (\%)} = (Tb - Tai)/Tb \times 100$$

Symbols in the equation have the following meanings.

Tb: Number of test insects in the treated area

Tai: Number of surviving insects when the treated area is observed

The results are as shown in the following table.

| | Mortality (%) |
|---|---|
| Example 1 | 100 |
| Example 2 | 100 |
| Example 3 | 100 |
| Example 4 | 95 |
| Comparative Example 1 | 13 |
| Comparative Example 2 | 17 |
| Comparative Example 3 | 7 |
| Comparative Example 4 | 13 |
| Comparative Example 5 | 10 |
| Comparative Example 6 | 66 |

INDUSTRIAL APPLICABILITY

According to the present invention, a pest controlling composition having a high activity, and a method capable

of effectively controlling pests can be provided.

## Claims

1. A pest controlling composition comprising, as active ingredients, a pyrimidine compound represented by Formula (1):

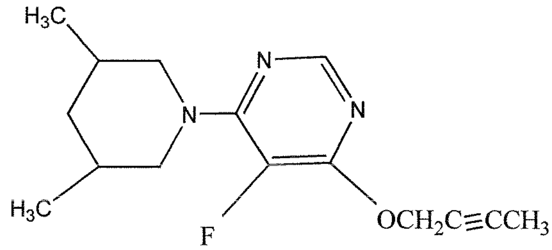

(1)

and an anthranilamide compound represented by Formula (2):

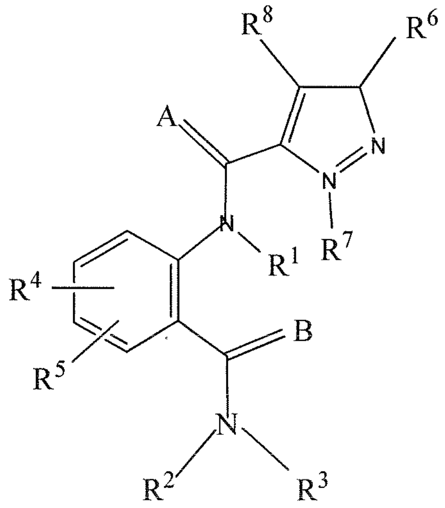

(2)

wherein A and B independently represent an oxygen atom or a sulfur atom;
$R^1$ represents a hydrogen atom, a $C_1$-$C_6$ alkyl group, a $C_2$-$C_6$ alkoxycarbonyl group, or a $C_2$-$C_6$ alkylcarbonyl group;
$R^2$ represents a hydrogen atom or a $C_1$-$C_6$ alkyl group;
$R^3$ represents a hydrogen atom, a $C_1$-$C_6$ alkyl group which may be substituted with a substituent selected from Group i, a $C_2$-$C_6$ alkenyl group which may be substituted with a substituent selected from Group i, a $C_2$-$C_6$ alkynyl group which may be substituted with a substituent selected from Group i, a $C_3$-$C_6$ cycloalkyl group which may be substituted with a substituent selected from Group i, a $C_1$-$C_4$ alkoxy group, a $C_1$-$C_4$ alkylamino group, a $C_2$-$C_8$ dialkylamino group, a $C_3$-$C_6$ cycloalkylamino group, a $C_2$-$C_6$ alkoxycarbonyl group, or a $C_2$-$C_6$ alkylcarbonyl group;
$R^4$ represents a hydrogen atom, a $C_1$-$C_6$ alkyl group, a $C_2$-$C_6$ alkenyl group, a $C_2$-$C_6$ alkynyl group, a $C_3$-$C_6$ cycloalkyl group, a $C_1$-$C_6$ haloalkyl group, a cyano group, a halogen atom, a $C_1$-$C_4$ alkoxy group, a $C_1$-$C_4$ haloalkoxy group, or a nitro group;
$R^5$ represents a hydrogen atom, a $C_1$-$C_6$ alkyl group, a $C_1$-$C_6$ haloalkyl group, a $C_2$-$C_4$ alkoxyalkyl group, a cyano group, a $C_1$-$C_4$ hydroxyalkyl group, $COR^9$, $CO_2R^9$, $CONR^9R^{10}$, a halogen atom, a $C_1$-$C_4$ alkoxy group, a $C_1$-$C_4$ haloalkoxy group, $NR^9R^{10}$, $NR^{10}COR^9$, $NR^{10}CO_2R^9$, or $S(O)_nR^{11}$;
$R^6$ represents a hydrogen atom, a $C_1$-$C_6$ alkyl group, a $C_1$-$C_6$ haloalkyl group, a halogen atom, a cyano group, a $C_1$-$C_4$ alkoxy group, or a $C_1$-$C_4$ haloalkoxy group;
$R^7$ represents a $C_1$-$C_6$ alkyl group, a $C_2$-$C_6$ alkenyl group, a $C_2$-$C_6$ alkynyl group, a $C_3$-$C_6$ cycloalkyl group, a $C_1$-$C_6$ haloalkyl group, a $C_2$-$C_6$ haloalkenyl group, a $C_2$-$C_6$ haloalkynyl group, a $C_3$-$C_6$ halocycloalkyl group, a phenyl group which may be substituted with a group selected from Group ii, a benzyl group which may be substituted with a group

selected from Group ii, a 5-membered aromatic heterocyclic group which may be substituted with a group selected from Group ii, a 6-membered aromatic heterocyclic group which may be substituted with a group selected from Group ii, a naphthyl group which may be substituted with a group selected from Group ii, an 8-membered aromatic condensed bicyclic heterocyclic group which may be substituted with a group selected from Group ii, a 9-membered aromatic condensed bicyclic heterocyclic group which may be substituted with a group selected from Group ii, or a 10-membered aromatic condensed bicyclic heterocyclic group which may be substituted with a group selected from Group ii;

$R^8$ represents a hydrogen atom, a $C_1$-$C_6$ alkyl group, a $C_1$-$C_6$ haloalkyl group, a halogen atom, a $C_1$-$C_4$ alkoxy group, or a $C_1$-$C_4$ haloalkoxy group;

$R^9$ represents a hydrogen atom, a $C_1$-$C_4$ alkyl group, or a $C_1$-$C_4$ haloalkyl group;

$R^{10}$ represents a hydrogen atom or a $C_1$-$C_4$ alkyl group;

$R^{11}$ represents a $C_1$-$C_4$ alkyl group or a $C_1$-$C_4$ haloalkyl group;

n represents 0, 1 or 2;

Group i consists of a halogen atom, a cyano group, a nitro group, a hydroxy group, a $C_1$-$C_4$ alkoxy group, a $C_1$-$C_4$ haloalkoxy group, a $C_1$-$C_4$ alkylthio group, a $C_1$-$C_4$ alkylsulfinyl group, a $C_1$-$C_4$ alkylsulfonyl group, a $C_2$-$C_6$ alkoxycarbonyl group, a $C_2$-$C_6$ alkylcarbonyl group, a $C_3$-$C_6$ trialkylsilyl group, a phenyl group in which one to three hydrogen atoms may be substituted with a group selected from Group ii, a phenoxy group in which one to three hydrogen atoms may be substituted with a group selected from Group ii, a 5-membered aromatic heterocyclic group in which one to three hydrogen atoms may be substituted with a group selected from Group ii, and a 6-membered aromatic heterocyclic group in which one to three hydrogen atoms may be substituted with a group selected from Group ii; and Group ii consists of a $C_1$-$C_4$ alkyl group, a $C_2$-$C_4$ alkenyl group, a $C_2$-$C_4$ alkynyl group, a $C_3$-$C_6$ cycloalkyl group, a $C_1$-$C_4$ haloalkyl group, a $C_2$-$C_4$ haloalkenyl group, a $C_2$-$C_4$ haloalkynyl group, a $C_3$-$C_6$ halocycloalkyl group, a halogen atom, a cyano group, a nitro group, a $C_1$-$C_4$ alkoxy group, a $C_1$-$C_4$ haloalkoxy group, a $C_1$-$C_4$ alkylthio group, a $C_1$-$C_4$ alkylsulfinyl group, a $C_1$-$C_4$ alkylsulfonyl group, a $C_1$-$C_4$ alkylamino group, a $C_2$-$C_8$ dialkylamino group, a $C_3$-$C_6$ cycloalkylamino group, a $C_4$-$C_B$ (alkyl)(cycloalkyl)amino group, a $C_2$-$C_4$ alkylcarbonyl group, a $C_2$-$C_6$ alkoxycarbonyl group, a $C_2$-$C_6$ alkylaminocarbonyl group, a $C_3$-$C_8$ dialkylaminocarbonyl group, and a $C_3$-$C_6$ trialkylsilyl group.

**2.** The pest controlling composition according to claim 1, wherein a weight ratio of the pyrimidine compound represented by Formula (1) to the anthranilamide compound represented by Formula (2) is within a range from 32 : 1 to 1 : 32.

**3.** A method for controlling pests, which comprises applying a pyrimidine compound represented by Formula (1):

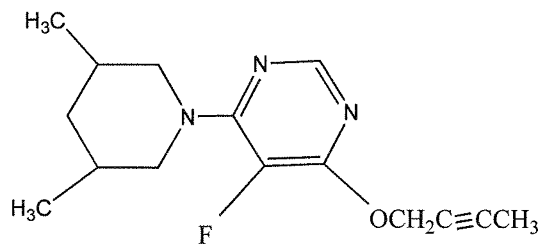

(1)

and an anthranilamide compound represented by Formula (2):

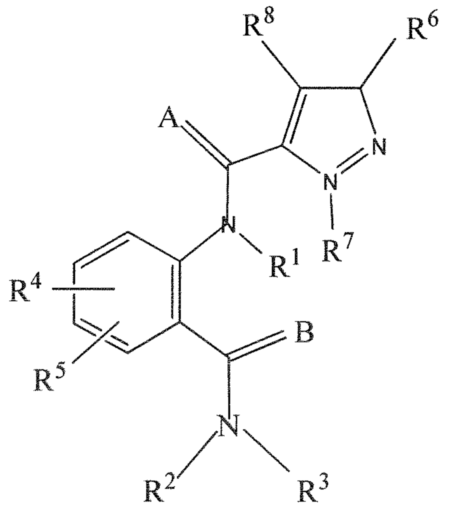

(2)

wherein A, B, $R^1$ , $R^2$, $R^3$, $R^4$, $R^5$, $R^6$, $R^7$ and $R^8$ are respectively as defined in claim 1, to pests or a place where pests inhabit.

**4.** Use of a combination of a pyrimidine compound represented by Formula (1):

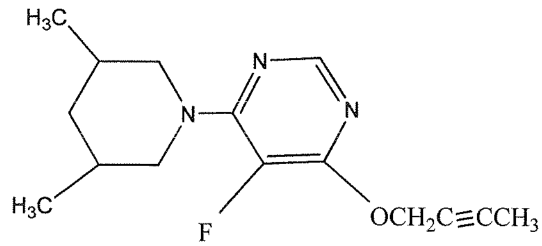

(1)

and an anthranilamide compound represented by Formula (2):

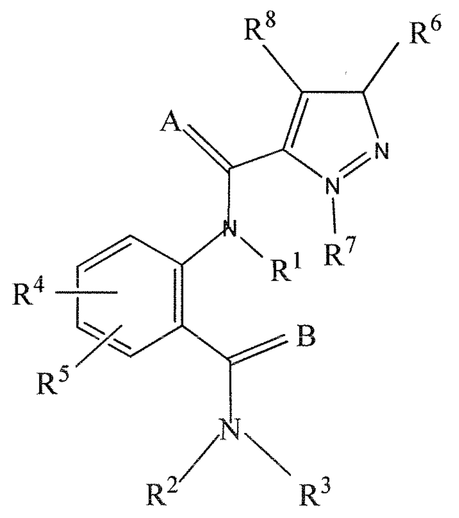

(2)

wherein A, B, $R^1$, $R^2$, $R^3$, $R^4$, $R^5$, $R^6$, $R^7$ and $R^8$ are respectively as defined in claim 1, for control of pests.

**INTERNATIONAL SEARCH REPORT**

International application No.
PCT/JP2009/067959

A. CLASSIFICATION OF SUBJECT MATTER
*A01N43/54*(2006.01)i, *A01N43/56*(2006.01)i, *A01P7/04*(2006.01)i

According to International Patent Classification (IPC) or to both national classification and IPC

B. FIELDS SEARCHED

Minimum documentation searched (classification system followed by classification symbols)
A01N43/54, A01N43/56, A01P7/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2006-160728 A (Sumitomo Chemical Co., Ltd.), 22 June 2006 (22.06.2006), claims & US 2008/0039445 A1 & EP 1809610 A1 & WO 2006/051891 A1 | 1-4 |
| A | JP 2005-350353 A (Sumitomo Chemical Co., Ltd.), 22 December 2005 (22.12.2005), claims & US 2006/0199800 A1 & US 2009/0203674 A1 & US 2009/0209518 A1 & US 2009/0209519 A1 & EP 1622879 A1 & WO 2004/099160 A1 | 1-4 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 October, 2009 (28.10.09) | 10 November, 2009 (10.11.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

INTERNATIONAL SEARCH REPORT

International application No.
PCT/JP2009/067959

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-502716 A (E.I. Du Pont De Nemours & Co.), 27 January 2005 (27.01.2005), claims & US 2004/0209923 A1 & EP 1427285 A1 & WO 2003/024222 A1 | 1-4 |
| A | JP 2004-538327 A (E.I. Du Pont De Nemours & Co.), 24 December 2004 (24.12.2004), claims & US 2005/0075372 A1 & US 2008/0275061 A1 & EP 1416796 A1 & WO 2003/015518 A1 | 1-4 |
| A | JP 2003-34682 A (Sumitomo Chemical Co., Ltd.), 07 February 2003 (07.02.2003), claims & US 2004/0077669 A1 & US 2005/0107609 A1 & EP 1366026 A1 & WO 2002/024663 A2 | 1-4 |
| P,A | WO 2008/129966 A1 (Sumitomo Chemical Co., Ltd.), 30 October 2008 (30.10.2008), claims & JP 2008-280342 A | 1-4 |
| P,A | JP 2008-280327 A (Ishihara Sangyo Kaisha, Ltd.), 20 November 2008 (20.11.2008), claims & WO 2008/072783 A1 | 1-4 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005350353 A
- JP 2004538327 A
- JP 2004538328 A
- EP 0374753 A
- WO 9307278 A
- WO 9534656 A
- EP 0427529 A
- EP 451878 A
- WO 03052073 A
- EP 0392225 A
- WO 9533818 A
- EP 0353191 A
- WO 03000906 A